# EUROPEAN PATENT APPLICATION

(11) **EP 4 683 351 A1**
(43) Date of publication of application: **21.01.2026**
(21) Application number: 25189443.2
(22) Date of filing: 14.07.2025
(51) Int. Cl.: H04R 25/00, G02C 11/06, G02C 11/00

(54) **ADAPTER FOR A HEAD MOUNTED DEVICE WITH AN INTEGRATED LOUDSPEAKER**

(30) Priority: 19.07.2024 EP 24315352
(71) Applicant: ESSILOR INTERNATIONAL, 94220 Charenton-Le-Pont (FR)
(72) Inventor: ROBERTS, Cory, Dighton, MA 02715 (US); PONTILLO, Pietro, 32021 Agordo (IT)
(74) Representative: Modiano, Micaela Nadia

(57) **Abstract**

An adapter (1) for a head mounted device with an integrated loudspeaker, comprising a base element (2) which is adapted to be coupled to a lower surface of a portion of the head mounted device and is provided with a cover (15) which is adapted to be coupled with the base element (2) and encloses the portion of the head mounted device internally, the base element (2) being provided with an extension (4) that enables fastening at an end of the portion of the head mounted device, the base element (2) being provided in a lower region with a tube (6) to connect a loudspeaker cavity (9) of the portion of the head mounted device externally, for connection to a 2CC coupler (11).

## Description

The present invention relates to an adapter for a head mounted device with an integrated loudspeaker. A head mounted device is a device that is adapted to be worn by the user on the head and may include an eyewear device, a spectacle, a glasses frame, goggles (all these here generally denominated "eyeglasses"), a helmet, visors, a headset, and a clip-on device.

More specifically, the invention thus relates to an adapter for an integrated loudspeaker in a pair of eyeglasses. Even more specifically, the invention relates to an adapter for an integrated loudspeaker in a pair of eyeglasses that is capable of being coupled with a BTE hearing aid.

As is known, a hearing aid of the BTE type is an aid that is worn behind the ear and in which a tube sends the sound into the auditory canal. BTE hearing aids are suitable for light, moderate and severe cases of hardness of hearing.

There is a need to couple an integrated loudspeaker in a head mounted device or, more specifically, in pair of electronic eyeglasses with a BTE hearing aid, so that a person who wears this hearing aid is able to hear sounds originating from the pair of electronic eyeglasses.

Nowadays no solutions are available that allow the above-mentioned connection.

The aim of the present invention is to provide an adapter for a head mounted device with an integrated loudspeaker, which makes it possible to transmit the sound from the loudspeaker integrated in the eyeglasses to a BTE hearing aid for persons who are hard of hearing.

Within this aim, an object of the present invention is to provide an adapter for a head mounted device with an integrated loudspeaker that enables a simplified connection to a BTE hearing aid.

Another object of the present invention is to provide an adapter for a head mounted device with an integrated loudspeaker, which enables an effective transmission of the sound to the BTE hearing aid, through a 2CC coupler according to ANSI and ISO standards.

Another object of the present invention is to provide an adapter for a head mounted device with an integrated loudspeaker that is highly reliable, easily and practically implemented and at low cost.

This aim and these and other objects which will become better apparent hereinafter are achieved by an adapter for a head mounted device with an integrated loudspeaker, characterized in that it comprises a base element which is adapted to be coupled to a lower surface of a portion of the head mounted device and is provided with a cover which is adapted to be coupled with said base element and encloses said portion of the head mounted device internally, said base element being provided with an extension that enables fastening at the end of said portion of the head mounted device, said base element being provided in a lower region with a tube to connect a loudspeaker cavity of said portion of the head mounted device externally, for connection to a 2CC coupler.

Further characteristics and advantages of the invention will become better apparent from the description of a preferred, but not exclusive, embodiment of the adapter according to the present invention, which is illustrated by way of non-limiting example in the accompanying drawings wherein:

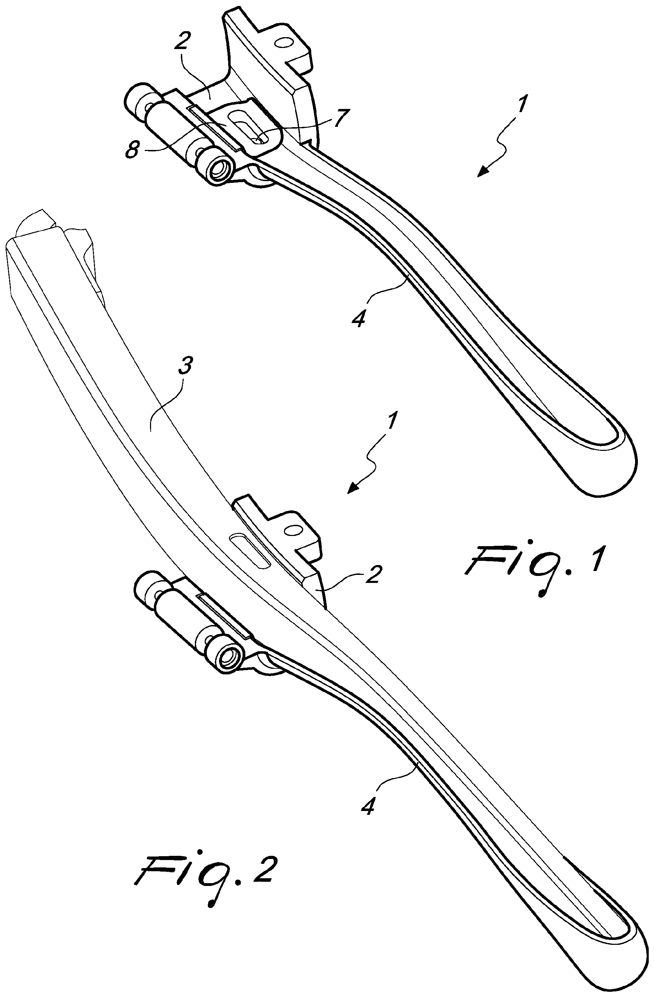

Figure 1 is a perspective view of the adapter according to the present invention;
Figure 2 is a perspective view of the adapter according to the present invention applied to an eyeglass temple;

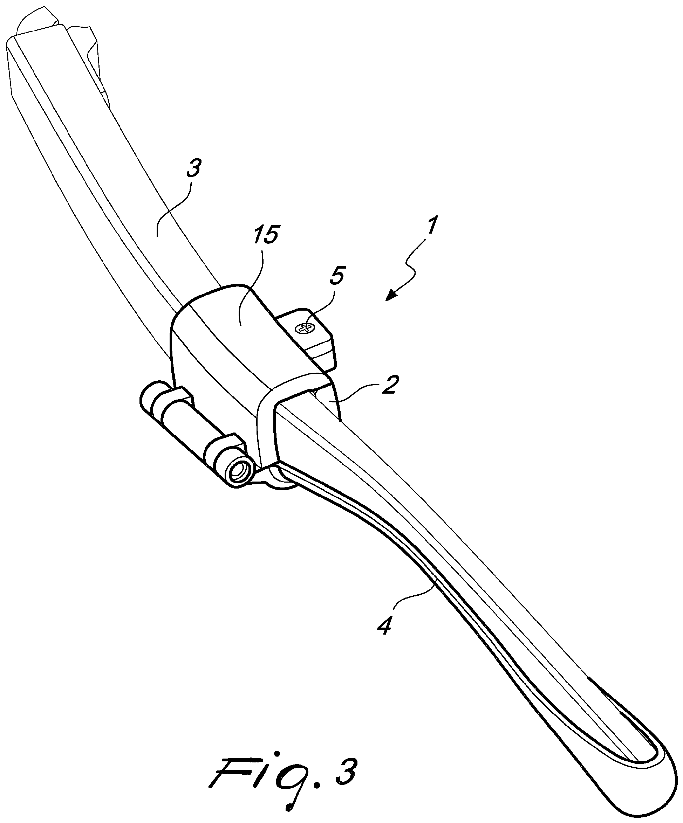

Figure 3 is a perspective view of the adapter according to the invention fastened to an eyeglass temple, in the complete configuration;

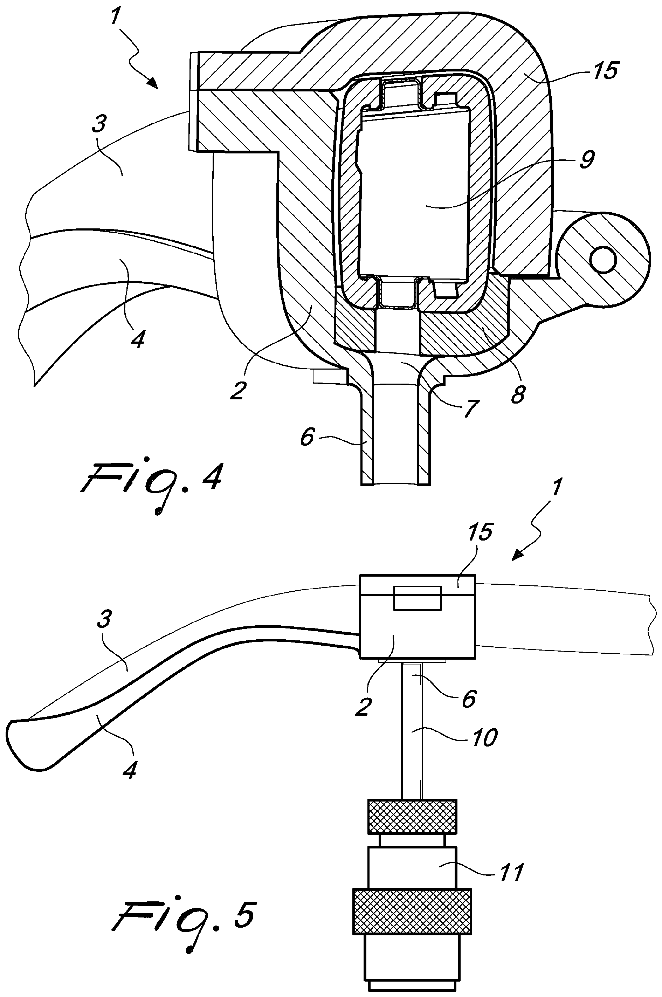

Figure 4 is a transverse cross-sectional view of the adapter according to the present invention, in the configuration in which it is fastened to an eyeglass temple;
Figure 5 is a side view of the adapter according to the invention fastened to an eyeglass temple.

With reference to the figures, the adapter according to the present invention, generally designated by the reference number 1, comprises a base element 2 which is adapted to be coupled with a lower surface of portion of a head mounted device. Hereinafter the head mounted device will be exemplified by a pair of eyeglasses. The base element 2 is therefore coupled with a lower surface of an eyeglass temple 3, such base element 2 being provided with an extension portion 4 adapted to be fastened to an end of the portion of the head mounted device and thus of the temple 3 so that the extension 4 and the base element 2 are adjacent to the lower surface of the temple 3.

A cover 15 is hinged to the base element 2 and fixed thereto by means of a screw 5.

In this manner, the base element 2 and the cover 15 hinged to it define a form of shell that closely encompasses the portion of the head mounted device and thus of the temple 3 of the eyeglasses.

Conveniently, the base element 2 is provided in a lower region with a portion of hollow tube 6 which is connected to a hole 7 present on the surface of the base element 2.

A sealing element 8 is arranged at the hole 7 of the base element 2 and is intended to be brought into contact with a cavity 9 defined in the lower surface of the temple 3 of the eyeglasses, through which sound passes. This cavity is in fact the cavity of the loudspeaker inside the temple 3.

In this manner, an acoustic route is created between the cavity 9 of the loudspeaker integrated in the temple 3, the hole 7 of the base element 2 and the tube 6 connected to the base element 2.

This acoustic route makes it possible to convey the sound from the loudspeaker integrated in the temple 3 of the eyeglasses to a tube 10 which is a standard 2 mm BTE tubs used in the hearing aid industry. The tube 10 is therefore used to connect the adapter according to the invention to a 2CC coupler 11 as specified by ANSI and ISO standards.

In substance, therefore, the base element 2 with the associated cover 15 are arranged so as to encompass the temple 3 and the screw 5 tightens the cover 15 on the base element 2 with the temple 3 between them, and therefore the sealing element 8 is pressed against the lower surface of the temple 3 at the acoustic cavity 9, so preventing the sound from dispersing and instead making it possible to define an acoustic channel between the cavity 9 of the loudspeaker integrated in the temple 3 and the tube 6.

In practice it has been found that the adapter according to the present invention fully achieves the set aim and objects, in that it makes it possible to couple an integrated loudspeaker of a head mounted device to a 2CC coupler using a BTE tube.

The adapter thus conceived is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

The disclosures in European Patent Application No. 24315352.5 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An adapter (1) for a head mounted device with an integrated loudspeaker, **characterized in that** it comprises a base element (2) which is adapted to be coupled to a lower surface of a portion of the head mounted device and is provided with a cover (15) which is adapted to be coupled with said base element (2) and encloses said portion of the head mounted device internally, said base element (2) being provided with an extension (4) that enables fastening at an end of said portion of the head mounted device, said base element (2) being provided in a lower region with a tube (6) to connect a loudspeaker cavity (9) of said portion of the head mounted device externally, for connection to a 2CC coupler (11).

2. The adapter according to claim 1, **characterized in that** said base element (2) is provided with a sealing element (8) adapted to be arranged around said loudspeaker cavity (9) of the portion of the head mounted device when said base element (2) and the associated cover (15) are fastened to said portion of the head mounted device, said sealing element (8) being adapted to be compressed around said portion of the head mounted device when said cover (15), that is hinged to said base element (2), is locked by means of a screw (5) onto said base element (2).

3. The adapter according to claim 1 or 2, **characterized in that** said tube (6) of said base element (2) is adapted to be coupled with a BTE tube (10) for connection to said 2CC coupler (11).

4. The adapter according to claim 1, **characterized in that** said base element (2) and said cover (15) adapt in the manner of a shell around said portion of the head mounted device.

5. The adapter according to claim 1, **characterized in that** said head mounted device includes an eyewear device, a spectacle, a glasses frame, goggles, a helmet, visors, a headset, and a clip-on device.

6. The adapter according to claim 1, **characterized in that** said head mounted device is an eyewear device and said portion of the head mounted device is a temple (3) of said eyewear device.
